(19) Europäisches Patentamt
European Patent Office
Office européen des brevets

(11) **EP 1 873 546 A1**

(12) **EUROPEAN PATENT APPLICATION**

(43) Date of publication:
**02.01.2008 Bulletin 2008/01**

(51) Int Cl.:
*G01S 1/00* (2006.01)

(21) Application number: **07110823.7**

(22) Date of filing: **22.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **23.06.2006 US 815838 P**

(71) Applicant: **Nemerix SA**
**CH-6928 Manno (CH)**

(72) Inventors:
• **Garin, Lionel**
**Palo Alto, 94303 (US)**

• **Mole, Steve**
**Cambourne, Cambridgeshire CB23 5EF (GB)**

(74) Representative: **P&TS**
**Patents & Technology Surveys SA**
**Rue des Terreaux 7,**
**2001 Neuchâtel (CH)**

Remarks:
A request for correction of claim 19 has been filed pursuant to Rule 88 EPC. A decision on the request will be taken during the proceedings before the Examining Division (Guidelines for Examination in the EPO, A-V, 3.).

(54) **Method and system for ephemeris extension for GNSS applications**

(57) Methods and devices for calculating long-validity satellite prediction data, compacting such data and providing the data GNSS receivers are presented. The data are compacted using a multistage compaction approach which takes physical models into account and produces an extremely low-memory satellite prediction data file size for transmission to remote receivers.

FIG. 1

Description

CROSS REFERENCE TO RELATED APPLICATIONS

This application claims priority from United States provisional application 60/815,838, filed June 23, 2006, the contents of which are incorporated by reference in their entirety including the specification, drawings and claims.

FIELD OF THE INVENTION

The present invention relates generally to Global Navigation Satellite System (GNSS) techniques for determining a receiver's position. More specifically, the present invention relates to technology that allows for prediction of a GNSS receiver's location much longer than that which would be possible using standard GNSS techniques.

BACKGROUND OF THE INVENTION

The Global Positioning System (GPS) is one type of Global Navigation Satellite System (GNSS). While other types of Global Navigation Satellite Systems exist, for example the Galileo system, the GPS can be taken as exemplary for purposes of the present description. Typically, a GPS receiver calculates its position through use of Broadcast Ephemeris for multiple satellites. Broadcast Ephemeris is, as the name implies, broadcast by the GPS satellite. Each satellite sends out its own ephemeris data only. The Broadcast Ephemeris for a satellite are predictions of the current position and velocity of the satellite, and are modulated onto the L1 carrier signal broadcast by the satellites. GPS receivers that can receive this modulated data use it to calculate their position. GPS Broadcast Ephemeris typically produce a satellite position with an acceptable error within two to four hours after their initial broadcast by the satellite. When a GPS receiver is either powered down or is physically located in a structure which obstructs reception of Broadcast Ephemeris for more than this time period, the receiver may be required to use outdated ephemeris with a corresponding high position error.

When a vehicle with a Portable Navigation Device (PND) or GPS receiver mounted on the dashboard or the windshield is parked overnight in an indoor garage, for example, the GPS function usually cannot deliver a position for quite a long time after the vehicle leaves the garage the next day. The GPS section takes a long time (up to 10 minutes) in urban canyon environment to recover the Broadcast Ephemeris from the satellites, due to the low signal level conditions and highly interrupted nature of the received signals. No position fix is possible until the ephemeris is recovered, even if the satellites are tracked.

Standard GPS techniques require Broadcast Ephemeris data to perform a position fix, after the satellite signals have been acquired. The ephemeris data for a particular satellite typically require, with a clear view of the sky, 30 seconds to download. The signals cannot be demodulated if the signal is weak (e.g. less than -145 dBm). Under weak-signal conditions, ephemeris data are typically transmitted to the (A)-GPS receiver from an assistance network. As an example, a cellular telephone may use the assistance network of a cellular tower to receive transmission of ephemeris data.

Ephemeris Extension allows for predicting a set of ephemeris over a period of time much longer than the original 2 hours. Typically the predictions are valid for a number of days. After 4 days, the extension over time implies a loss in accuracy with respect to a position calculated from real ephemeris. With a good Ephemeris Extension, in nominal signal strength conditions, but with an intermittent signal, the Time To First Fix (TTFF) is typically in the 5 to 15 second range with the current state-of-the-art GPS receiver technology. The impact is evident in situations where the receiver is switched on after a long period of time (>2 hours) in particular in a difficult environment (e.g., an urban canyon). In weak signal environments a position fix is still possible without real-time assistance data. Over longer periods, it is not necessary to have real-time assistance, if the user can accept a less accurate fix (after 4 days).

SUMMARY OF THE INVENTION

Briefly, the embodiments of the present invention relate to an Ephemeris Extension technology that provides a solution to the delay experienced by GPS receivers using conventional GPS broadcast techniques following periods of non-reception of Broadcast Ephemeris. In one embodiment of the invention, a fix of the receiver's position following a period of non-reception of Broadcast Ephemeris may result within 5 to 10 seconds after the receiver is turned back on or leaves the environment preventing the reception of Broadcast Ephemeris. One principle is to store in the GPS receiver a set of long-validity or Extended Ephemeris, which are loaded by other means than broadcast navigation messages (such means including, for example, an Internet connection, a wireless connection, or the download of a file).

The long-validity Ephemeris can come from a knowledge of the precise current position of a satellite, velocity and acceleration obtained from actual measurements from reference stations. The position of each satellite can be propagated using a model, which can be, for example, an accurate force model (including, e.g., terms for gravity, solar pressure , lunisolar effects, and Y-bias). The raw result of this prediction phase is a sequence of accurate predicted positions per a particular time interval. This information is then compacted and sent to the GPS receiver where it can be decompacted and used for navigation.

Further features, aspects and advantages of the present invention will become apparent from the detailed description of preferred embodiments that follows, when considered together with the accompanying figures of drawing.

## BRIEF DESCRIPTION OF THE DRAWINGS

Fig. 1 illustrates an example function of Ephemeris Extension Technology.

Fig. 2 is a block diagram of a preferred embodiment used to generate prediction data.

Figs. 3A and 3B describe the spatial relationship between the orbital elements used in the variation of elements model to produce the long validity Ephemeris.

Fig. 4 is a block diagram of an alternate preferred embodiment used to generate prediction data.

Fig. 5 describes schematically a further embodiment of the invention.

## DETAILED DESCRIPTION OF PREFERRED EMBODIMENTS

Embodiments of the present invention are explained hereinafter with particular reference to the figures. In one embodiment of the present invention, a method for expressing forward in time satellite position prediction information in a way as compact and simple as possible, such that transmission to the receiver via an assistance network is as fast and efficient as possible.

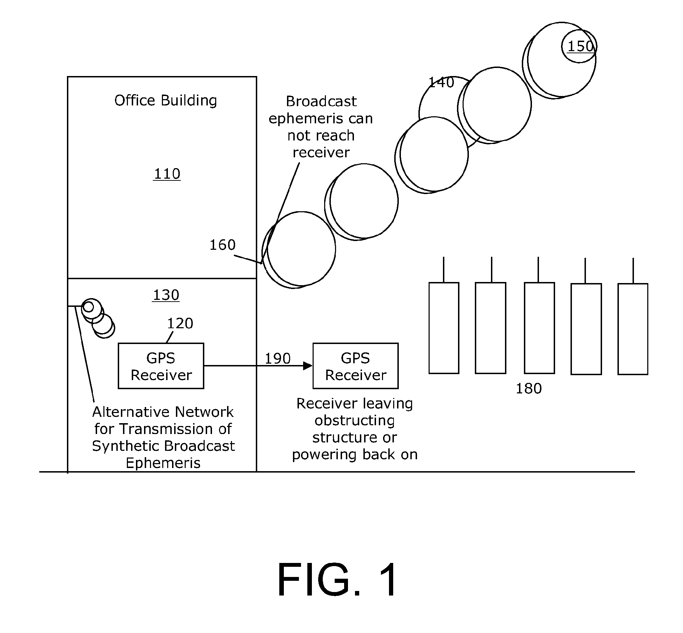

Fig. 1 illustrates an example function of Ephemeris Extension technology. In the figure there is an office building 110 under which a GPS receiver 120 is located in a parking garage 130. The Broadcast Ephemeris 140 of GPS satellites 150 cannot be received 160 by the GPS receiver 120 when it is located in the underground parking garage 130. The same reception prevention could occur if the GPS receiver 70 were powered down.

Ephemeris Extension technology is useful for when the GPS receiver is powered back on or is removed from the obstructing structure 190 and placed in an area where Broadcast Ephemeris may be received. Using standard GPS techniques, it may take an extended period of time for the receiver to fix its location after leaving the obstructing structure or being powered back on. The problem is particularly acute in urban canyon environments 180. In Fig. 1, the GPS receiver 170 is leaving the parking garage 130 and entering an urban canyon environment 180. Using standard GPS techniques, the receiver 170 could take up to ten minutes to recover Broadcast Ephemeris from the satellites 150, due to low signal level conditions, and highly interrupted nature of the received signals.

In one embodiment of the present invention, a type of Ephemeris Extension technology achieves long-validity Ephemeris by generating data which can be used in place of a standard Broadcast Ephemeris. The data is a compact expression of satellite orbit prediction information. The data can be used with a standard Broadcast Ephemeris position computation module.

The data used for satellite position prediction can be, for example, transmitted to the client receiver. One method for generating the data is through the use of a host machine, which generates the data in the following exemplary fashion. The host machine first obtains a sequence of predicted satellite positions at particular points in time, for example every 900 seconds. The positions may simply be X, Y, and Z Earth-centered Earth-fixed coordinates at a particular point in time, and can include satellite velocities, accelerations and / or satellite clock error data.

The sequence of predicted satellite positions is then converted into a sequence of curve-fitted orbital elements, at the same 900 second sample period. The curve-fitting can be performed by any of a number of methods, including least-squares analysis. Here the term "orbital element" is intended to refer to a parameter in a mathematical model of a satellite's orbit. Some exemplary orbit models appropriate for use herein are discussed below.

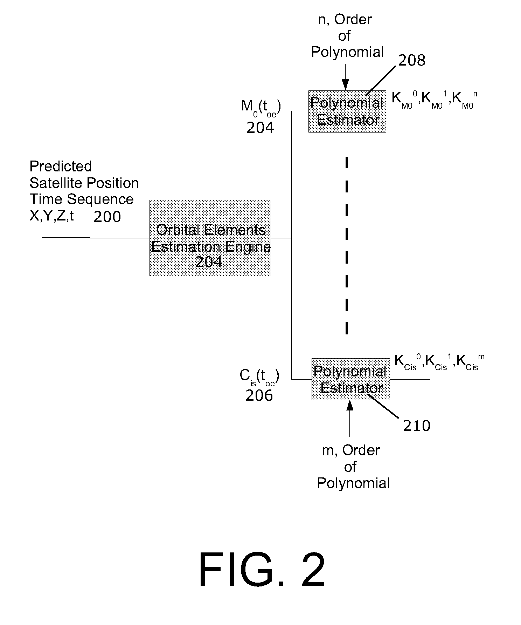

Figure 2 illustrates an exemplary two-stage embodiment in detail. The series of predicted satellite positions 200 is provided to an Orbital Elements Estimation Engine 202, which is preferably a software code module embedded in a storage device or machine readable medium, but can be an application specific integrated circuit or similar pure hardware device. Within the Orbital Elements Estimation Engine 202, a $t_{oe}$ is chosen for the series of satellite position predictions 200. The $t_{oe}$ will be successively set to each one of all the 900 second segment time tags of the predicted time sequence inside a preset window, which is sized to reflect the amount of time for which the prediction will be valid. Some of the points at the beginning and at the end are ignored to take into account the prediction window size. The standard orbital elements of the Broadcast Ephemeris, for example, as listed in (Table 1), are curve fitted, using a sliding window of a set of satellite positions around the preset $t_{oe}$. In one embodiment of the present invention, the current window extends to four 900 seconds segments earlier, and four 900 second segments later.

TABLE 1

| Orbital Element | Description |
|---|---|
| $M_0$ | Mean Anomaly at Reference Time |
| $\Delta n$ | Mean Motion Difference From Computed Value |
| e | Eccentricity |
| $(A)^{1/2}$ | Square Root of the Semi-Major Axis |
| $(OMEGA)_0$ | Longitude of Ascending Node of Orbit Plane at Weekly Epoch |
| io | Inclination Angle at Reference Time |
| $\omega$ | Argument of Perigee |
| OMEGADOT | Rate of Right Ascension |
| IDOT | Rate of Inclination Angle |
| $C_{uc}$ | Amplitude of the Cosine Harmonic Correction Term to the Argument of Latitude |
| $C_{us}$ | Amplitude of the Sine Harmonic Correction Term to the Argument of Latitude |
| $C_{rc}$ | Amplitude of the Cosine Harmonic Correction Term to the Orbit Radius |
| $C_{rs}$ | Amplitude of the Sine Harmonic Correction Term to the Orbit Radius |
| $C_{ic}$ | Amplitude of the Cosine Harmonic Correction Term to the Angle of Inclination |
| $C_{is}$ | Amplitude of the Sine Harmonic Correction Term to the Angle of Inclination |

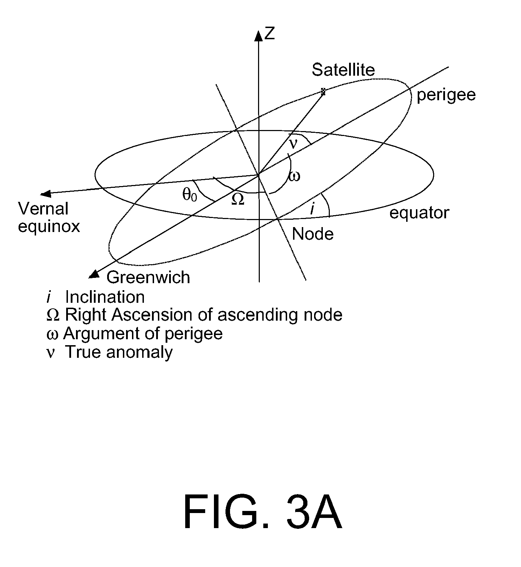

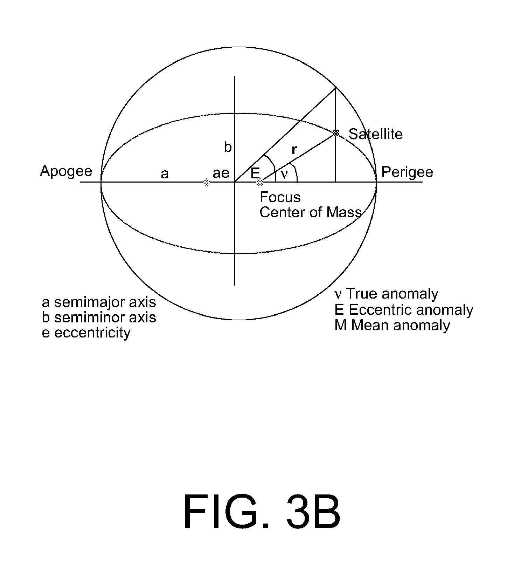

Figure 2 further illustrates the procedure by which the time series of each orbital element is created in one embodiment of the invention. Two exemplary orbital elements are shown: $M_o$ (Mean Anomaly at Reference Time) 204 and $C_{is}$ (Amplitude of the Sine Harmonic Correction Term to the Angle of Inclination) 206. These are two of the orbital elements stored in the data used to calculate a satellite's position in the future. The remainder of the elements for use in this exemplary model are listed in Table 1. There are, generally speaking, two categories of elements. The first category are those that give the orientation of the orbit plane which are illustrated in Fig. 3A. The second category are those that give the position of the satellite in the orbit plane and along the orbit, as illustrated in Fig. 3B. The second set are also commonly referred to as the Kepler Elements.

The foregoing elements are used by a Broadcast Ephemeris position computation module in a GPS receiver to calculate the position of a satellite. A selection of the formulae used for calculating the position are shown below:

$$n = \frac{2\pi}{P} = \sqrt{\frac{\mu}{a^3}}$$ (1)

$$M(t) = n(t - T_0)$$ (2)

$$E(t) = M(t) + e \sin E(t)$$ (3)

$$v(t) = \tan^{-1}\left[\frac{\sqrt{1-e^2}\,\sin E(t)/(1-e\cos E(t))}{(\cos E(t)-e)/(1-e\cos E(t))}\right]$$ (4)

$$r_i = R_3(-\Omega)R_1(-i)R_3(-\omega)r$$ (5)

$$r_e = R_3(-\Omega + \theta)R_1(-i)R_3(-\omega)r$$ (6)

The formulas (1) through (4) are used to calculate the position of the satellite along the orbit. The formulas (5) and (6) are used to calculate the orientation of the orbit plane in space, and the orbit onto the orbit plane.

The result of these curve-fittings will be a series of values with respect to time for each orbital element. For any given time will t, an accurate estimate of the satellite's position can be obtained using the orbital elements that result from the curve fit centered at the point $t_{oe} = t$ and the equations shown above. The accuracy of the estimate will degrade when the $t - t_{oe}$ difference increases.

A second step can then be taken, as shown in Fig. 2, to provide a better and more compact estimation of the orbital elements over an extended validity period. The result of the first curve fit is a set of osculating elements, or a set of orbital elements tangent with the true orbit and same velocity vector at time $t_{oe}$ as indicated by the exemplary elements 204 and 206 in Fig. 2. Consequently, each of the orbital elements, as listed in Table 1 is now seen as another independent time sequence. However, according to the theory of perturbations, the behavior of each of these elements falls into one of three categories: the elements are either secular (continuous drift), slow periodic (periodicity larger than the orbital period), or fast periodic (periodicity shorter than the orbital period). Only the secular and fast periodic perturbations are of interest in the model. Both of these two perturbations can be expressed as polynomials of varying degrees, and incorporated in the polynomial for each orbital element.

Thus a second curve-fitting step takes place through polynomial estimators 208 and 210, which are preferably software code modules embedded in a storage device, but which may alternately be part of the Orbital Elements Estimation Engine 202 or application specific integrated circuits or the like. A polynomial estimation preferably takes place for each element.

Each polynomial estimate is a function representing the value of an orbital parameter over time, and may be a constant (one parameter or coefficient), a first order polynomial (two parameters or coefficients), a second order polynomial (three parameters or coefficients) or a higher-order polynomial as needed. The order of the polynomial can be different for each of the orbital elements, and can be adjusted for a given orbital element to achieve a predetermined level of accuracy degradation and also to reflect the quality of the satellite position prediction over time. Additionally, the resolution of each polynomial coefficient is also adjusted to minimize further the size of the prediction data. This will successfully complete the polynomial estimator as shown in Figure 2 in the exemplary two stage embodiment of the present invention.

The coefficients of this second curve fit are stored in a prediction file and sent to a GPS client. The word "file" here is used in its broadest sense to mean a sequence of data or related sequences of data. The important feature of the file is that it contains the information that should be transmitted to a GNSS receiver at one time or over intervals that, when taken together, are short compared to the validity of the data itself. The receiver can use the parameters in the file to reconstruct a function of each orbital element in the ephemeris equations with time, wherein each of the functions has a polynomial form. The particular value of each orbital element can be calculated with an estimate of time, which may be obtained from a local clock source, an assistance network, or demodulation of the GPS time of the week, for example. Because of the relatively smooth variation of the modeled orbital elements, small errors in the initial estimate of GPS time are not likely to cause large variations in the predicted orbital elements.

The actual reconstruction of ephemeris data can proceed as follows. If the data is encrypted the data is first decrypted. Two exemplary ways are described in which embodiments of the present invention handle compressed data, if the data has in fact been compressed. In one embodiment, the compressed file is decompressed and stored in a decompressed format in non-volatile memory. Alternatively, the file may be stored in compressed format, and decompressed on the fly, and possibly only partially, to reduce the amount of electronic memory necessary to perform the calculations.

If the receiver requires ephemeris information and is not able to demodulate this information from satellite signals, the client can provide an approximate GPS time to a decompaction module. The decompaction module uses the data transmitted from the host computer, to generate a Synthetic Broadcast Ephemeris, which can be used to compute an X, Y, Z position for the target satellite at time t. The decompaction module accomplishes this task by recomputing each orbit element with the input time used as the $t_{oe}$ of the Synthetic Broadcast Ephemeris, and as the input model for each orbital element. The result is a Synthetic Broadcast Ephemeris which can be used by a Broadcast Ephemeris computation model present in standard GPS receivers.

Figure 1 includes an illustration of how one embodiment of the present invention would allow a prediction file to be transmitted to the GPS receiver. Any method will work, be it Internet download from an ftp server or website, FM broadcast, a cellular telephone network, or any other alternate solution offering accurate data transmission. The method itself is not that important, but access to the server is preferably provided at regular intervals, for example, about every 24 hours, when the server is in the client's reach. As an example, Figure 1 illustrates the transmission of the prediction file used to create Synthetic Broadcast Ephemeris using a wireless network which can transmit to the receiver while it is sitting in the garage. The transmission of data includes, in one embodiment, only the coefficients of the polynomials used to predict various orbital elements, which gives the file a small size. In addition, the data can be further compressed using a standard data compression method. Also, if the business model so requires, the data can be further encrypted using a variety of encryption algorithms.

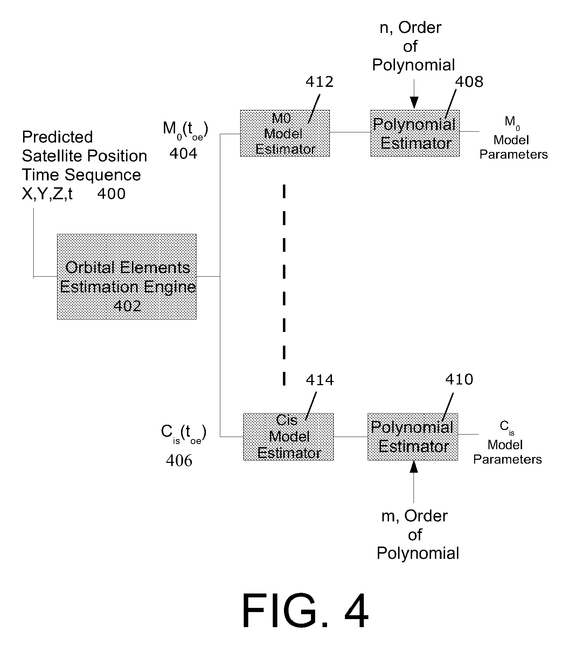

Embodiments of the invention are extendable to include more stages of modeling, resulting in greater data compaction. In Fig. 4 the method as described in Figure 2 is extended to three stages by integrating physical models for the variation of orbital elements. Fig. 4 again shows satellite position prediction data 400, estimated orbital elements 404 and 406, Model Estimators 412 and 414, as well as polynomial estimators 408 and 410.

Orbital Estimation Engine 402 is again provided with a series of satellite position predictions 400. The Orbital Estimation Engine 402 performs a curve-fit for each element at a specific point in time $t_{oe}$, using a method similar to that described in relation to Fig. 2, which likewise results in a time series of each orbital element. Instead of forming a polynomial fit of each orbital element, however, the variation in orbital elements can be modeled using knowledge of the physical causes of the variation.

For this second stage of modeling, there are existing physical models that can be used to describe variations in each of the orbital elements. As an illustration, Equations (7) - (10) below model the contributions from moon and sun attraction to the variations of the Longitude Ascending node $\Omega$, and the argument of perigee $\omega$:

| | |
|---|---|
| $\Omega_{moon} = -0.00338\cos(i)/n$ | (7) |
| $\Omega_{sun} = -0.00154.\cos(i)/n$ | (8) |
| $\omega_{moon} = 0.00169.(4-5.\sin^2(i))/n$ | (9) |
| $\omega_{sun} = 0.00077(4-5.\sin^2(i))/n$ | (10) |

Similarly, equations (11) and (12) below are equations modeling the contributions for the same elements due to the main term of the earth gravity tesseral elements.

| | |
|---|---|
| $$\Omega_{J_2} = -1.5nJ_2\left(R_E/a\right)^2\left(\cos(i)\right)\left(1-e^2\right)^{-2}$$ | (11) |
| $$\omega_{J_2} = 0.75nJ_2\left(R_E a\right)^2\left(4-5\sin^2(i)\right)\left(1-e^2\right)^{-2}$$ | (12) |

Equations (13) - (15) below model the variation in semi-major axis, periodicity of revolution, and velocity per revolution, due to the atmospheric drag.

| | |
|---|---|
| $$\Delta a_{rev} = \frac{-2\pi C_D A\rho a^2}{m}$$ | (13) |
| $$\Delta P_{rev} = \frac{-6\pi^2 C_D A\rho a^2}{mV}$$ | (14) |
| $$\Delta V_{rev} = \frac{\pi C_D A\rho aV}{m}$$ | (15) |

Since these equations model actual physical phenomena, they are generally better models for the variation of orbital elements than polynomial functions, which are not intended to carry within the functions themselves information regarding these phenomena. It is thus possible through physical modeling to produce more accurate models using fewer parameters and having a smaller file size, since the information required to accurately model an orbit is contained within the mathematical operations of the equation itself. These operations are, in preferred embodiments of the invention, not transmitted to the GNSS receiver, but rather known by (preprogrammed into or accessible in memory to) the decompaction module.

The embodiments of the present invention are particularly useful when used in a GNSS receiver that is capable of intermittent demodulation of navigation data including Broadcast Ephemeris. If a decompaction module of a GNSS receiver is in possession of a prediction file according to one of the embodiments of the present invention which transmits polynomial or similar functional coefficients, and the GNSS receiver is further able to demodulate Broadcast Ephemeris or other broadcast satellite position prediction data, the newly received broadcast satellite position prediction data can be used to update the prediction file. This is generally done by replacing the constant coefficients in the prediction file with the newly received broadcast orbital elements, since the model variation in orbital elements is less likely to change over the long-term. Thus, the GNSS receiver can refresh its ability to use long-term and accurate satellite position prediction data without being in contact with the host machine, but rather by receiving normal Broadcast Ephemeris data.

The size of Broadcast Ephemeris used to predict the position of GPS satellites over a seven day period is generally several hundred thousand bytes. Embodiments of the invention, however, effect a large reduction in data size over that time interval to less than five kilobytes, or approximately three kilobytes in the preferred embodiments discussed above by virtue of the variation of elements and polynomial modeling methods applied. By representing prediction data in one of the formats previously described it is possible to achieve a ratio of hours of valid full ephemeris (all valid satellites) to kilobyte of greater than 50 to 1, or about 56 to 1, more generally of between 50 and 60 to 1, depending on the file header size and choice. This is important particularly when the data is being transmitted by a wireless network. The advantage of the lower data size will be more apparent if the transmission method has a relatively low throughput per unit time.

To reduce further the prediction file size, an alternate embodiment of the invention is possible. Specifically, the model for the osculating trajectory can be seen as a ephemeris with harmonic terms forced to zero, (*i.e.* almanac model) which also have tendency to have a little bit more chaotic shape, and less amenable to an accurate polynomial approximation. Table 2 shows the correspondence between the Broadcast Ephemeris elements and the almanac orbital elements.

The net result is a relatively good prediction around the $t_{oe}$, but with a faster degradation when the $(t - t_{oe})$ difference becomes larger than, say, +/-1/2 hour. There is with this particular embodiment a need to request a refresh of the Synthetic Broadcast Ephemeris more often than the normal usability period of a Broadcast Ephemeris (4 hours), but this operation is local to the GPS client. Otherwise, the Synthetic Broadcast Ephemeris can be used in a satellite prediction algorithm with no changes.

TABLE 2

| Ephemeris | Description | Almanac |
|---|---|---|
| $M_0$ | Mean Anomaly at Reference Time | $M_0$ |
| $\Delta n$ | Mean Motion Difference From Computed Value | 0 |
| e | Eccentricity | e |
| $(A)^{1/2}$ | Square Root of the Semi-Major Axis | $(A)^{1/2}$ |
| $(OMEGA)_0$ | Longitude of Ascending Node of Orbit Plane at Weekly Epoch | $(OMEGA)_0$ |
| $i_0$ | Inclination Angle at Reference Time | 0.30 semi-circles |
| $\omega$ | Argument of Perigee | $\omega$ |
| OMEGADOT | Rate of Right Ascension | OMEGADOT |
| IDOT | Rate of Inclination Angle | 0 |
| $C_{uc}$ | Amplitude of the Cosine Harmonic Correction Term to the Argument of Latitude | 0 |
| $C_{us}$ | Amplitude of the Sine Harmonic Correction Term to the Argument of Latitude | 0 |
| $C_{rc}$ | Amplitude of the Cosine Harmonic Correction Term to the Orbit Radius | 0 |
| $C_{rs}$ | Amplitude of the Sine Harmonic Correction Term to the Orbit Radius | 0 |
| $C_{ic}$ | Amplitude of the Cosine Harmonic Correction Term to the Angle of Inclination | 0 |
| $C_{is}$ | Amplitude of the Sine Harmonic Correction Term to the Angle of Inclination | 0 |

The preferred embodiments have several advantages over the previous art. These advantages include, for example, a very small prediction file size, for example less than five kilobytes or about 3 kilobytes (2.5 - 3.5 kilobytes) for one week's worth of full prediction data in the preferred embodiments of the invention. The process of curve fitting and introducing a physical model results in the prediction having fewer parameters. Consequently, the compaction method is very efficient, and results in a small amount of data transmitted to the GNSS receiver. The prediction file can be stored in the GNSS client (non volatile memory), instead of the host processor (e.g. cell phone processor), as was typical for the prior art. Furthermore, the preferred embodiments are easy to implement on the GNSS client side. The decompaction function can create a satellite prediction model that is the same as a standard GNSS ephemeris model, which can be used in place of the broadcast model, using the standard Broadcast Ephemeris position computation module, which is software that uses Broadcast Ephemeris to compute satellite positions or the receiver position, and which is a component of standard GNSS receivers.

The decompaction method is very simple as all orbit elements can be expressed as a polynomial approximations or functions of similar simplicity. The simple decompaction algorithm can be implemented in the GPS client, reducing the impact and dependency on a host processor.

The form of the prediction of the preferred embodiments is also very suitable for "prediction refresh". If a newer Broadcast Ephemeris can be demodulated from a satellite at a later date than the date of the prediction, The current value of the orbit parameters can be used to "reset the offset" of the prediction. The variation of the orbital element is still obtained from the prediction, but from the point where the Broadcast Ephemeris provided a more precise orbital element.

The preferred embodiments also provide the potential for greater compaction. The compaction method, based on several stages of physical modeling, can be extended to integrate physical models for variation of elements (e.g., in three or four stages), leading to an even more compact set of curve fit parameters.

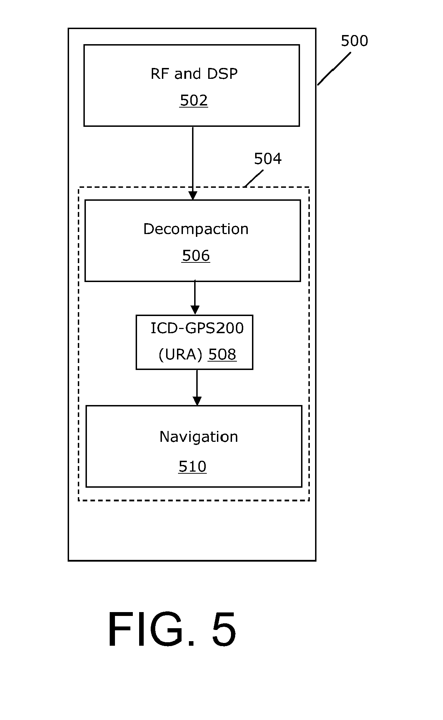

Figure 5 depicts a navigation receiver 500 employing a further embodiment of the invention. Receiver 500 has an RF and DSP front end 502, in communication with a processor 504 (shown by dashed lines) operating decompaction software 506, which performs decompation from a satellite position prediction file. The receiver 500 further comprises navigation software 510, which uses computes a receiver location based on GNSS measurements and satellite position predictions.

Receiver 500 preferably employs a variation of elements satellite position prediction method as described herein. RF and DSP front end 502 receives and processes a prediction file, which as implied in Fig. 5 is transmitted over an RF network such as a wireless cellular telephone network, but which can be transmitted to the receiver 500 by any conventional means such as over the Internet. RF and DSP front end 502 receive the prediction file and transmit it to decompaction software 506 operating on processor 504.

The satellite position prediction finally available to the decompaction software 506 depends on several factors, including the satellite prediction accuracy, the curve fit done on the satellite position time sequence, and on the quality and the loss experienced during the orbital elements compaction process. Regardless of the origin of this prediction error, it needs to be communicated to the navigation software in the mobile, to appropriately deweight the influence of the measurements attached to a particular satellite versus the others.

After decompaction, the majority of systems will expect to receive the prediction in the format specified by the ICD-GPS200 standard (Revision D, IRN-200D-001 March 7, 2006) which is hereby incorporated by reference. Decompaction software 506 thus expands the prediction file into data useful for estimating the position of a satellite and translates data into a format specified in the ICD-GPS200 standard, hereby incorporated by reference. The decompaction software 506 preferably uses the standard GPS assistance mechanism to convey the ICD-GPS200-coded information to the navigation software 510.

There is one field in the ICD-GPS200 format, the URA (User Range Accuracy), that conveys as an index the "along line of sight" measurement error. The embodiment as described in relation to Fig. 5 uses this mechanism, with the same conversion table (see 20.3.3.3.1.3 SV Accuracy page 84 of the ICD-GPS200), to convey three-dimensional prediction accuracy information combining all sources of error. Time-dependent one sigma three dimensional position prediction accuracy information is preferably incorporated into the prediction file format as a polynomial approximation, and is delivered to the navigation software 510 as a URA at 508, using the same indexing table, with a value dependent on the age of the prediction and/or other factors affecting its accuracy.

The embodiment of Fig. 5 advantageously uses the ephemeris extension technology of the present invention in a format which will not require extensive redesign of existing GNSS applications, which reduces the complexity and integration time required for a GPS receiver. The decompaction section 506, which calculates the URA, is then preferably implemented as software module separate from the navigation software 510, although this is not required.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention.

The embodiments (which can be practiced separately or in combination) were chosen and described in order to explain the principles of the invention and as practical application to enable one skilled in the art to make and use the invention in various embodiments and with various modifications suited to the particular use contemplated. It is intended that the scope of the invention be defined by the claims appended hereto and their equivalents.

**Claims**

1.  A method for providing satellite position prediction data to a GNSS receiver, comprising:

    receiving data indicating at least the position of a satellite with respect to at least two points in time;
    computing an curve fit of an orbital element corresponding to an orbital model for each of the two points in time to yield a set of data including an estimate of the orbital parameter for each of the two points in time;
    computing the coefficients of a modeling function that fits the estimates of the orbital element for each of the two points in time; and
    transmitting the coefficients to a GNSS receiver.

2.  The method of claim 1, wherein the orbital model is the GPS Broadcast Ephemeris model and wherein the step of computing a curve fit of an orbital element for each of the at least two points in time comprises computing a curve fit of each orbital element of the orbital model.

3.  The method of claim 2, wherein the at least two points in time comprise sufficient points to span one week, and wherein the method further comprises the step of formatting the coefficients in a file with a size of less than five kilobytes.

4.  The method of claim 1, wherein the step of computing the coefficients of a modeling function that fits the estimates of the orbital element for each of the two points in time comprises computing the coefficients using a variation of elements method.

5.  A method for calculating the position of a satellite, comprising:

    receiving data comprising coefficients of modeling functions that predict the value of an orbital element within a time interval;
    obtaining an estimate of the current time;
    using the estimate of the current time and the data comprising coefficients of modeling functions to predict the value of at least one orbital element of an orbital model;
    using the orbital model to predict a position of a satellite.

6.  The method of claim 5, further comprising the step of storing the data comprising coefficients of modeling functions that predict the value of an orbital element within a time interval into non-volatile memory associated with a GNSS receiver.

7.  The method of claim 5, further comprising the step of providing an estimate of the accuracy of a prediction file as part of ICD-GPS200 user range accuracy data.

8.  The method of claim 5, further comprising the steps of
    receiving a broadcast version of the coefficients of the orbital model that is more recent than the data comprising coefficients of modeling functions that predict the value of an orbital element within a time interval, from either a satellite or an assistance network; and
    updating the data comprising coefficients of modeling functions that predict the value of an orbital element within a time interval using the broadcast version of the coefficients of the orbital model.

9.  A method for providing data useful for the prediction of the position of a satellite, comprising:

    receiving data indicating at least the position of a satellite with respect to at least two points in time;
    computing a curve fit of an orbital element corresponding to an orbital model for each of the two points in time to yield a set of data including an estimate of the orbital parameter for each of the two points in time;
    computing the likely variation of the orbital element over time using at least one physical model;
    computing the coefficients of a modeling function that fits the variation of the orbital element over time for each of the two points in time; and
    transmitting the coefficients to a GNSS receiver.

10. The method of claim 9, wherein the orbital model is the GPS Broadcast Ephemeris model and wherein the step of computing a curve fit of an orbital element for each of the at least two points in time comprises computing a curve fit of each orbital element of the orbital model.

11. The method of claim 10, wherein the at least two points in time comprise sufficient points to span one week, and wherein the method further comprises the step of formatting the coefficients in a file with a size of less than five kilobytes.

12. The method of claim 9, wherein the step of computing the coefficients of a modeling function that fits the estimates of the orbital element for each of the two points in time comprises computing the coefficients using a variation of elements method.

13. A method for updating a satellite position model, comprising:

receiving a signal transmitted from a source that comprises at least one parameter used in a satellite orbit prediction model;
extracting from a memory data indicating a prediction with respect to time of the at least one parameter used in a satellite orbit prediction model;
updating the data indicating a prediction with respect to time of the at least one parameter used in a satellite orbit prediction model using the at least one parameter used in a satellite orbit prediction model received from the source.

14. The method of claim 13, wherein the step of updating the data indicating a prediction with respect to time of the at least one parameter used in a satellite orbit prediction model further comprises using the at least one parameter to replace a constant term in a polynomial function which is used to model the state of the parameter with respect to time.

15. The method of claim 13, wherein the source is a GNSS satellite.

16. The method of claim 13, wherein the source is an wireless cellular network.

17. A machine readable medium having program code embedded therein, wherein when the code is executed it causes a computer to perform a method comprising the steps of:

receiving data comprising coefficients of modeling functions that predict the value of an orbital element within a time interval;
obtaining an estimate of the current time;
using the estimate of the current time and the data comprising coefficients of modeling functions to predict the value of at least one orbital element of an orbital model;
using the orbital model to predict a position of a satellite.

18. The medium of claim 17, wherein the orbital model is the GPS Broadcast Ephemeris model and wherein the method step of computing a curve fit of an orbital element for each of the at least two points in time comprises computing a curve fit of each orbital element of the orbital model.

19. The medium of claim 17, wherein the method further comprises the step of providing an estimate of the accuracy of a prediction file as part of ICD-GPS200 user range accuracy data.

20. The medium of claim 18, wherein the at least two points in time comprise sufficient points to span one week, and wherein the method further comprises the step of formatting the coefficients in a file with a size of less than five kilobytes.

21. The medium of claim 17, wherein the step of computing the coefficients of a modeling function that fits the estimates of the orbital element for each of the two points in time comprises computing the coefficients using a variation of elements method.

22. A machine readable medium having program code embedded therein, wherein when the code is executed it causes a computer to perform a method comprising the steps of:

receiving data indicating at least the position of a satellite with respect to at least two points in time;
computing a curve fit of an orbital element corresponding to an orbital model for each of the two points in time to yield a set of data including an estimate of the orbital parameter for each of the two points in time; computing the likely variation of the orbital element over time using at least one physical model; computing the coefficients of a modeling function that fits the variation of the orbital element over time for each of the two points in time; and transmitting the coefficients to a GNSS receiver.

23. The medium of claim 22, wherein the method further comprises the step of storing the data comprising coefficients of modeling functions that predict the value of an orbital element within a time interval into non-volatile memory associated with a GNSS receiver.

24. The medium of claim 22, wherein the method further comprises the steps of
receiving a broadcast version of the coefficients of the orbital model that is more recent than the data comprising coefficients of modeling functions that predict the value of an orbital element within a time interval, from either a satellite or an assistance network; and
updating the data comprising coefficients of modeling functions that predict the value of an orbital element within a time interval using the broadcast version of the coefficients of the orbital model.

25. A machine readable medium having program code embedded therein, wherein when the code is executed it causes a computer to perform a method comprising the steps of:

receiving a signal transmitted from a source that comprises at least one parameter used in a satellite orbit prediction model;
extracting from a memory data indicating a prediction with respect to time of the at least one parameter used in a satellite orbit prediction model;
updating the data indicating a prediction with respect to time of the at least one parameter used in a satellite orbit prediction model using the at least one parameter used in a satellite orbit prediction model received from the source.

26. The medium of claim 25, wherein the orbital model is the GPS Broadcast Ephemeris model and wherein the step of computing a curve fit of an orbital element for each of the at least two points in time comprises computing a curve fit of each orbital element of the orbital model.

27. The medium of claim 25, wherein the at least two points in time comprise sufficient points to span one week, and wherein the method further comprises the step of formatting the coefficients in a file with a size of less than five kilobytes.

28. The medium of claim 25, wherein the step of computing the coefficients of a modeling function that fits the estimates of the orbital element for each of the two points in time comprises computing the coefficients using a variation of elements method.

29. A method for providing satellite position prediction data to a GNSS receiver, comprising:

receiving data indicating at least the position of a satellite with respect to at least two points in time;
computing data useable by a GNSS receiver having a decompaction module and a Broadcast Ephemeris position computation module to predict the position for a predetermined time of all valid GNSS satellites within a particular satellite system;
formatting the data into a file having a file, the file having a size in kilobytes that is at least fifty times smaller than the predetermined time measured in hours; and
transmitting the data do a GNSS receiver.

30. The method of claim 29, wherein the predetermined time is one week, and the file has a size of about 3 kilobytes.

31. The method of claim 29, wherein the file has a size of less than five kilobytes.

Office Building

110

130

120

GPS
Receiver

Alternative Network
for Transmission of
Synthetic Broadcast
Ephemeris

Broadcast
ephemeris can
not reach
receiver

160

150

140

190

GPS
Receiver

Receiver leaving
obstructing
structure or
powering back on

180

# FIG. 1

n, Order
of
Polynomial
208

$M_0(t_{oe})$
204

Polynomial
Estimator

$K_{M0}{}^0, K_{M0}{}^1, K_{M0}{}^n$

Predicted
Satellite Position
Time Sequence
X,Y,Z,t    200

Orbital Elements
Estimation Engine
204

$C_{is}(t_{oe})$
206

Polynomial
Estimator

$K_{Cis}{}^0, K_{Cis}{}^1, K_{Cis}{}^m$

210

m, Order
of
Polynomial

# FIG. 2

FIG. 3A

Apogee

a    ae

b    r

E    ν

Satellite

Perigee

Focus
Center of Mass

a semimajor axis
b semiminor axis
e eccentricity

ν True anomaly
E Eccentric anomaly
M Mean anomaly

# FIG. 3B

n, Order
of
Polynomial

412                                          408

Predicted         $M_0(t_{oe})$      M0              Polynomial      $M_0$
Satellite Position                   Model           Estimator       Model
Time Sequence         404            Estimator                       Parameters
X,Y,Z,t      400

         Orbital Elements
         Estimation Engine
              402

                     414                                410

$C_{is}(t_{oe})$          Cis             Polynomial       $C_{is}$
                          Model           Estimator        Model
     406                  Estimator                        Parameters

                                         m, Order
                                         of
                                         Polynomial

# FIG. 4

500

RF and DSP

502

504

Decompaction

506

ICD-GPS200
(URA) 508

Navigation

510

FIG. 5

**European Patent Office**

## EUROPEAN SEARCH REPORT

Application Number

EP 07 11 0823

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 211 819 B1 (KING THOMAS MICHAEL [US] ET AL) 3 April 2001 (2001-04-03) <br> * figure 1 * <br> * figures 7-11 * <br> * column 4, lines 26-47 * <br> * column 8, line 13 - line 22 * <br> * column 8, lines 33-56 * <br> ----- | 1-31 | INV. <br> G01S1/00 |
| X | US 6 829 535 B2 (DIGGELEN FRANK VAN [US] ET AL VAN DIGGELEN FRANK [US] ET AL) 7 December 2004 (2004-12-07) <br> * column 4, line 21 - column 5, line 29; figures 1-3 * <br> * column 5, line 46 - line 50 * <br> ----- | 1-31 | |
| X | US 2002/188403 A1 (LAMANCE JAMES W [US] ET AL LAMANCE JAMES W [US] ET AL) 12 December 2002 (2002-12-12) <br> * paragraph [0030] - paragraph [0049]; figures 1,2,4 * <br> ----- | 1-31 | |
| E | WO 2007/099196 A (NOKIA CORP [FI]; WIROLA LAURI [FI]; SYRJAERINNE JARI [FI]; ALANEN KIMM) 7 September 2007 (2007-09-07) <br> * figures 3,5 * <br> ----- | 1 | TECHNICAL FIELDS SEARCHED (IPC) <br><br> G01S |

The present search report has been drawn up for all claims

| Place of search | Date of completion of the search | Examiner |
|---|---|---|
| The Hague | 9 October 2007 | Kern, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

**ANNEX TO THE EUROPEAN SEARCH REPORT
ON EUROPEAN PATENT APPLICATION NO.**                   EP 07 11 0823

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2007

| Patent document cited in search report | | Publication date | Patent family member(s) | | Publication date |
|---|---|---|---|---|---|
| US 6211819 | B1 | 03-04-2001 | AU<br>WO | 7075400 A<br>0116618 A1 | 26-03-2001<br>08-03-2001 |
| US 6829535 | B2 | 07-12-2004 | EP<br>WO<br>US<br>US | 1417798 A2<br>03010912 A2<br>2004049326 A1<br>2003023379 A1 | 12-05-2004<br>06-02-2003<br>11-03-2004<br>30-01-2003 |
| US 2002188403 | A1 | 12-12-2002 | AU<br>EP<br>JP<br>WO<br>US | 2002312220 A1<br>1405442 A2<br>2004529032 T<br>02099454 A2<br>2003014188 A1 | 16-12-2002<br>07-04-2004<br>24-09-2004<br>12-12-2002<br>16-01-2003 |
| WO 2007099196 | A | 07-09-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60815838 B